Europäisches Patentamt

European Patent Office

Office européen des brevets

(11) Publication number: **0 149 589**
**B1**

# EUROPEAN PATENT SPECIFICATION

(45) Date of publication of patent specification: **30.03.88**

(51) Int. Cl.⁴: **F 16 D 5/00, F 16 D 3/10, F 02 D 1/16**

(21) Application number: **85830003.1**

(22) Date of filing: **08.01.85**

(54) Joint with non-homokinetic rotation with variable phasing particularly for a control of the camshaft for internal combustion engine.

(30) Priority: **17.01.84 IT 6704684**

(43) Date of publication of application:
**24.07.85 Bulletin 85/30**

(45) Publication of the grant of the patent:
**30.03.88 Bulletin 88/13**

(84) Designated Contracting States:
**DE FR GB**

(56) References cited:
**CH-A- 222 030**
**GB-A- 246 613**
**US-A-2 293 717**
**US-A-2 444 148**

(73) Proprietor: FIAT AUTO S.p.A.
Corso Giovanni Agnelli 200
I-10135 Torino (IT)

(72) Inventor: Mazzetti, Gianni
Via Pietro Giuria 28
I-10100 Torino (IT)

EP 0 149 589 B1

Courier Press, Leamington Spa, England.

## Description

The present invention refers to a joint with non-homokinetic rotation with variable phasing particularly for a control of the head camshaft for internal combustion engines.

A joint which is similar to the type which forms the object of this invention can be seen from the US—A—2.293.717, but an important difference lies in the fact that this joint is a constant velocity joint.

The variable phasing timing systems are recently used more frequently to optimize the efficiency and the consumptions of the engines considering the high cost of the fuel.

The realization of a variable phasing timing control requires a certain complexity of particulars which often prejudice its good working and moreover make it noisy.

It must also be considered as a general rule that to vary the opening time or the lift of the valves are used axes with cams presenting a variable profile.

In fact, in order to vary the lift, the cam surface lies in a plane which is not parallel with the axis of the shaft supporting it and the cam itself is axially translated from time to time, while, to vary the opening time, it is necessary that the cam profile varies along the cam itself, so that translating the shaft the sliding block slides on cam sections presenting a different profile even if the plane in which lies the cam surface is always parallel with the axis of the shaft supporting it.

It is moreover to be considered that the sliding block and the cup controlling the valve must be adequately made, so to bear lateral thrusts which in the normal timing systems do not exist.

The production of this type of cams is particularly hard from the point of view of the manufacture, so that a timing system designed in such a way has rather high costs being of difficult manufacture.

The purpose of the present invention is to obtain a device controlling the camshaft for internal combustion engines which, although with variable phasing, is cheap, not too noisy and does not present too many manufacturing complications.

This purpose is realized through a device controlling the camshaft for internal combustion engines which comprises: a cylindrical body having one side connected to a drive, while the other side presents a hollow body provided with at least four tabs; a second cylindrical body having an extremity constituted by a hollow body having the same diameter of the first one, provided with at least four tabs fitted to couple to the tabs of said first cylindrical body to which it is coupled in frontal position with an axial rotation of 90° and the other extremity coaxially connected to the camshaft; a spherical cross having four cylindrical integral pins placed in orthogonal position in a middle plane passing through the centre of the sphere, said sphere having a diameter smaller than the inner diameter of the hollow body and said pins fitted to insert between one tab and the other of the first hollow cylindrical body and of the second one, and characterised in that it comprises a hollow cylinder with one base orthogonal to the axis and the other in a plane forming a γ angle with respect to the first one, and provided with a projection fitted to be connected to a retain/control member, said cylinder being fitted to insert on the tabs of the first cylindrical body.

Further characteristics and advantages will result from the following description referred to the enclosed drawings where:
—Fig. 1 is a view of the device according to the invention;
—Fig. 2 is an exploded view of the device of Fig. 1;
—Fig. 3 is a working diagram illustrating the device of the invention;
—Fig. 4 is a second working diagram;
—Fig. 5 is a third working diagram;
—Fig. 6 is a fourth working diagram.

With reference to the enclosed figures, 1 indicates a first cylindrical body connected at one side to a drive not illustrated; the other side present a hollow cylindrical body 2 provided with at least four tabs 3 delimiting four diametral grooves, two of big dimensions 4 and two of small dimensions 5.

Furthermore the body 1 is provided with an annular ledge 6 placed on its external wall.

On the tabs it is inserted a hollow cylinder 7 provided with a projection 8 fitted to be connected to a retain/control member not illustrated presenting one base 9 orthogonal to the cylinder axis and the other base 10 placed in a plane forming a γ angle with respect to the first base.

A cross 11 consisting of a sphere 12 and of four integral orthogonal pins 13 in a middle plane passing through the centre of the sphere is fitted to be inserted into the hollow cylindrical body 2 so that two of the four pins 13 insert into the small grooves 5 against the base 10 of the cylinder 7.

A second cylindrical body 14 is connected at one side 15 to the camshaft not illustrated, while the other side presents a hollow cylindrical body 16, identical to the cylindrical body of the body 1, presenting at least four tabs 17 delimiting four diametral grooves, two of which 18 are big while the other two 19 are small.

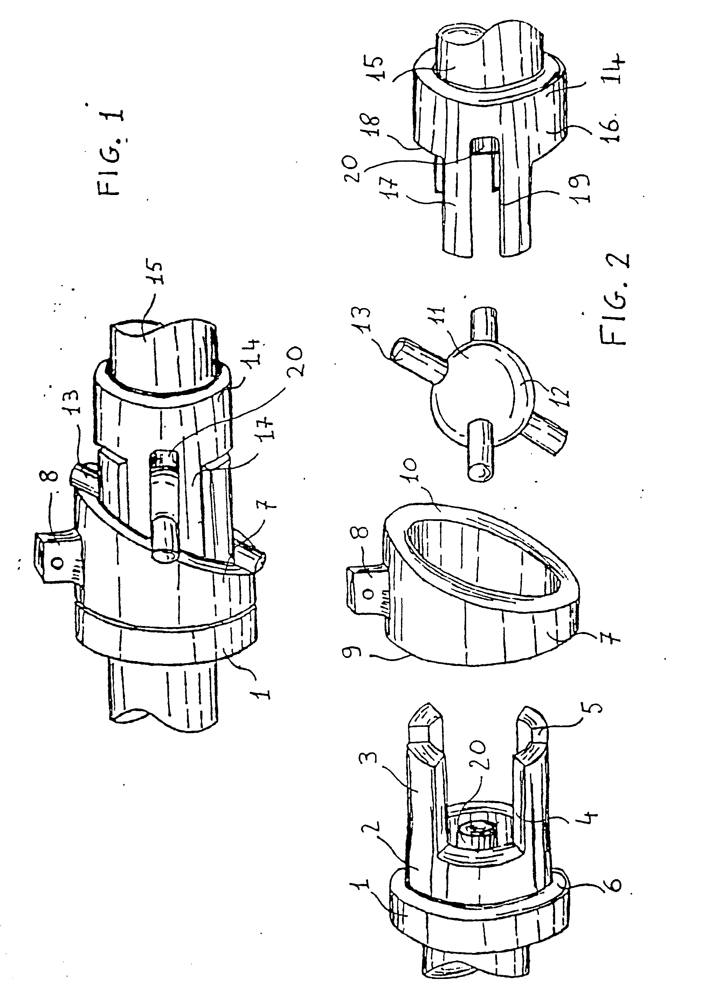

This second body, as it can be clearly seen from Fig. 1, inserts into the hollow cylinder 7 so that the tabs engage in the grooves 4 of the body 1 and the not engaged pins 13 of the cross 11 lie in the small grooves 19; while the axial position of the two bodies 1 and 14 constrains the axial translation of the spherical cross 12 through suitable supporting seats 20 placed inside of the respective hollows.

By this way it is realized a mechanical connection between the first cylindrical body and the second one.

The device illustrated has the purpose to modify the law of circular motion between the body 1 and the body 14, so to realize a non-homokinetic coupling between the two parts.

In fact the transmission of motion between the two bodies takes place as hereinafter described.

The body 1 which is duly controlled to rotate (with a uniform circular motion) makes the spherical cross 12, which engages with two of its pins 13 in the grooves 5, rotate around a rotation axis intersecting the axis of the body 1, as the above said cross 12 must slide on the plane formed by the inclined base 10 of the hollow cylinder 7.

The other couple of pins 13, orthogonal to the first couple, of the spherical cross 12 engaging in the grooves 19 of the body 14, causes the rotation of the latter around an axis which is the same of the one of the body 1.

The adjustment of the position of the plane in which lie the pins 13 of the spherical cross 12 can be obtained by an angular rotation of the hollow cylinder 7, through the projection 8 and a not illustrated mechanism with respect to any fixed reference.

By these coupling conditions, the kinematic motion of the device according to the invention, represented by the chain of the described members, is ruled by the angular law

$$\beta = \text{arctg}[\text{tg} \cdot \alpha \cdot (\cos \eta\gamma)]$$

where, with reference to Fig. 3, it is illustrated a phasing where the rotation axis $r$ of the cross 12 is complanate with the axes $Z$ and $\alpha$ and forms with the latter the $\gamma$ angle.

In Fig. 4 it is shown the periodical phenomenon of "pendulation" (angular advances and delays) of the body 14 with respect to the body 1 with a period $\pi$.

The max. angular value $\xi$ of such a "pendulation" is found again with opposite sign and a period about $\pi/2$.

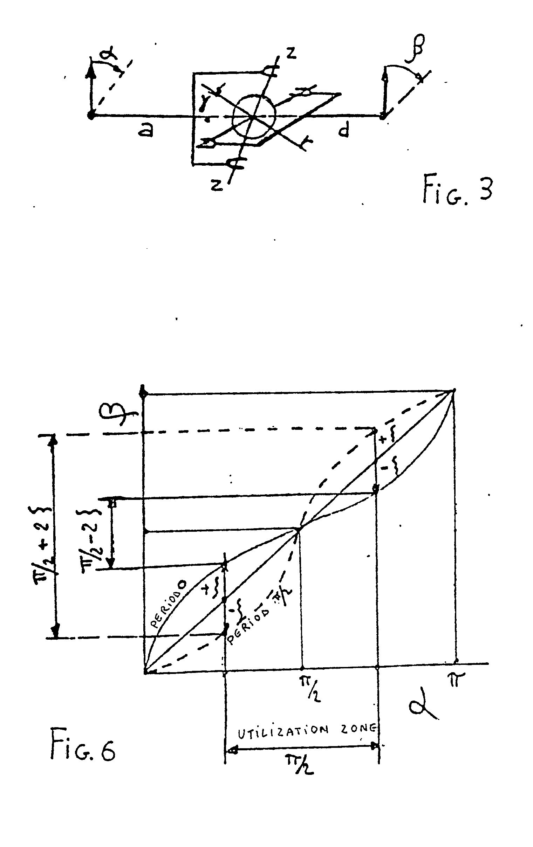

The modification of the orientation of the rotation axis of the spherical cross 12, made through an angular rotation $\delta$ of the hollow cylinder 7 determining the supporting plane of the cylindrical pins 13 of the above said spherical cross 12, causes a phasing variation of the curve of Fig. 3 which "shifts" with respect to the origin, of the same quantity $\delta$, keeping anyway its characteristics of "deformation" (see Fig. 5).

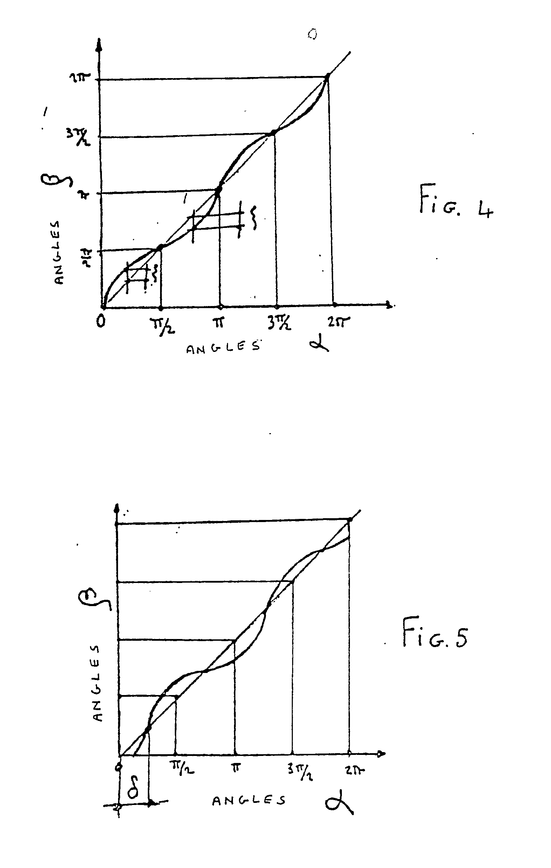

A rotation of the hollow cylinder 7 of the value of $\pi/2$ will permit to obtain a new deformation curve (non-kinetic curve) with symmetric pendulations with respect to the phase 0 (Fig. 6).

In such a situation, the max. angular values of the pendulation of the body 6 have the same abscissas but opposite signs.

From the above description it is evident that the device according to the invention can be used to obtain a regulation of the "angular duration" of the opening of a valve for internal combustion engines.

In fact, placing the virtual profile of a cam at constant geometry in correspondence of the "utilization zone" (Fig. 6) and acting on the phase of the curve of deformation of the angular motion, it can be obtained modifications in the "opening durations" which are functions of the variations of the motion (axis $\alpha$) to which the real cams are connected.

These variations of "angular duration" are rather wide (with a $\gamma$ angle of the cross of 22°30' can be obtained max. pendulations of the camshaft of about 20°) and involve variations of the "uncovered area" of about 40% with respect to the area determined by a cam of a normal profile moved by a circular uniform motion.

## Claim

Joint particularly for a control device of a camshaft for internal combustion engines which comprises: a cylindrical body (1) having one side connected to a drive, while the other side presents a hollow body (2) provided with at least four tabs (3); a second cylindrical body (14) having an extremity constituted by a hollow body (16) having the same diameter of the first one, provided with at least four tabs (17) fitted to couple to the tabs (3) of said first cylindrical body (1) to which it is coupled in frontal position with an axial rotation of 90° and the other extremity coaxially connected to the camshaft; a spherical cross (12) having four cylindrical integral pins (13) placed in orthogonal position in a middle plane passing through the centre of the sphere, said sphere having a diameter smaller than the inner diameter of the hollow body (16) and said pins (13) being fitted to insert between one tab (3) and the other of the first hollow cylindrical body (1) and of the second one, and characterised in that it comprises a hollow cylinder (7) with one base (9) orthogonal to the axis and the other (10) in a plane forming a $\gamma$ angle with respect to the first one, and provided with a projection (8) fitted to be connected to a retain/control member, said cylinder (7) being fitted to insert on the tabs (3) of the first cylindrical body (1).

## Patentanspruch

Gelenk, insbesondere für eine Steuereinrichtung einer Nockenwelle von Verbrennungskraftmaschinen, umfassend einen zylindrischen Körper (1), der an einer Seite mit einem Antrieb verbunden ist, während er an der anderen Seite einen Hohlkörper (2) aufweist, der wenigstens vier Finger (3) hat, einen zweiten zylindrischen Körper (14), dessen eines Ende koaxial mit der Nockenwelle verbunden ist, während dessen anderes Ende aus einem Hohlkörper (16) besteht, der denselben Durchmesser wie der erste Hohlkörper (2) hat und der wenigstens vier Finger (17) aufweist, die mit den Fingern (3) des ersten Hohlkörpers (2) kuppelbar sind, mit dem der zweite Hohlkörper (16) in einer um 90° verdrehten Stellung frontal gekuppelt ist, sowie ein kugelartiges Kreuz (12) mit vier zylindrischen Zapfen (13), die orthogonal zueinander in einer Mittelebene liegen, die durch das Zentrum de Kugel verläuft, deren Durchmesser kleiner als der Innendurchmesser des Hohlkörpers (16) ist und deren Zapfen (13) jeweils in den zwischen zwei Fingern (3) des ersten zylindrischen Hohlkörpers (2) ausgebildeten Schlitz bzw. in den entsprechenden Schlitz des zweiten Hohlkörpers (16) eingreifen, gekennzeichnet durch einen Hohlzylinder (7) mit einer ersten Basisfläche (9), die rechtwinklig zur Achse verläuft, und mit einer zweiten Basisfläche (10), die in einer Ebene liegt, welche mit der ersten Basisfläche (9) einen Winkel γ einschließt, wobei von dem Hohlzylinder (7) ein Ansatz (8) absteht, der mit einem Halte- und/oder Steuerglied verbindbar ist, und wobei der Hohlzylinder (7) auf die Finger (3) des ersten Hohlkörpers (2) aufschiebbar ist.

**Revendication**

Joint, notamment pour un dispositif de commande d'un arbre à cames pour moteurs à combustion interne, comprenant: un corps cylindrique (1) ayant un côté relié à un entraînement, tandis que l'autre côté présente un corps creux (2) pourvu d'au moins quatre pattes (3); un second corps cylindrique (14) ayant une extrémité constituée par un corps creux (16) ayant le même diamètre que le premier, pourvu d'au moins quatre pattes (17) adaptées pour être accouplées aux pattes (3) dudit premier corps cylindrique (1) auquel il est accouplé en position frontale avec une rotation axiale de 90°, l'autre extrémité étant coaxialement reliée à l'arbre à cames; un croisillon sphérique (12) ayant quatre doigts cylindriques solidaires (13) disposés orthogonalement dans un plan médian passant par le centre de la sphère, cette sphère ayant un diamètre plus petit que le diamètre intérieure du corps creux (16), et lesdits doigts (13) étant adaptés pour s'insérer entre une patte (3) et l'autre du premier corps cylindrique creux (1) et du second, et caractérisé en ce qu'il comprend un cylindre creux (7) avec une base (9) orothogonale à l'axe et une autre (10) dans un plan formant un angle γ par rapport à la première, et pourvu d'un saillant (8) adapté pour être relié à un élément de retenue/commande, ledit cylindre (7) étant adapté pour s'emboîter sur les pattes (3) du premier corps cylindrique (1).

FIG. 1

FIG. 2

0 149 589

0 149 589

Fig. 3

Fig. 6

2

Fig. 4

Fig. 5

3